Europäisches Patentamt

European Patent Office

Office européen des brevets

(19)

(11) Numéro de publication : **0 109 869**
**B1**

(12) **FASCICULE DE BREVET EUROPÉEN**

(45) Date de publication du fascicule du brevet :
02.03.88

(51) Int. Cl.⁴ : **G 01 S 15/89, G 10 K 11/34**

(21) Numéro de dépôt : **83401973.9**

(22) Date de dépôt : **10.10.83**

(54) **Dispositif numérique de formation de voies sonar.**

(30) Priorité : **22.10.82 FR 8217742**

(43) Date de publication de la demande :
**30.05.84 Bulletin 84/22**

(45) Mention de la délivrance du brevet :
**02.03.88 Bulletin 88/09**

(84) Etats contractants désignés :
**DE GB NL**

(56) Documents cités :
**FR-A- 2 472 753**
**US-A- 4 001 763**
**US-A- 4 074 223**
**US-A- 4 267 584**
**US-A- 4 325 257**
**US-A- 4 336 607**
**IBM TECHNICAL DISCLOSURE BULLETIN, vol. 24,
no. 11A, avril 1982, pages 5716-5723, New York, USA
R.D. PIERCE et al.: "Random-access memory beamformer"**
**Le dossier contient des informations techniques
présentées postérieurement au dépôt de la demande
et ne figurant pas dans le présent fascicule.**

(73) Titulaire : **THOMSON-CSF
173, Boulevard Haussmann
F-75379 Paris Cédex 08 (FR)**

(72) Inventeur : **Demeure, Alain
THOMSON-CSF SCPI 173, bld Haussmann
F-75379 Paris Cedex 08 (FR)**

(74) Mandataire : **Desperrier, Jean-Louis et al
THOMSON-CSF SCPI 19, avenue de Messine
F-75008 Paris (FR)**

EP 0 109 869 B1

## Description

La présente invention se rapporte aux dispositifs de formation de voies sonar, à grande bande de fréquence. Ces voies sont formées par compensation pour chaque voie des retards géométriques des signaux reçus par les différents capteurs, formant l'antenne sonar. L'invention se rapporte à une formation de voies par des techniques numériques.

Cette invention s'applique plus particulièrement aux sonars de bateaux ou de sous-marins ayant une antenne acoustique ne présentant que peu ou pas de symétrie.

Il est connu, par le brevet US 4 325 257 de former des voies dites angulaires ou spatiales, pour une antenne de N capteurs, par un dispositif numérique comportant une mémorisation des signaux, un calculateur d'adresses et un sommateur. Les N signaux reçus par ces capteurs sont multiplexés dans le temps, sont filtrés, puis sont numérisés. Un démultiplexeur distribue les valeurs des échantillons vers N mémoires vives correspondant respectivement aux N capteurs, et dans lesquelles les échantillons sont inscrits. Pour former un échantillon d'un signal de voie, N échantillons sont lus dans ces mémoires, puis sont sommés par un additionneur. Les échantillons sont lus avec un retard prédéterminé, par rapport à l'instant où ils ont été inscrits. Ce retard est le même pour tous les échantillons d'une mémoire vive et est égal au retard à appliquer aux échantillons du signal du capteur correspondant, pour former la voie considérée. La lecture et l'écriture dans la mémoire vive sont commandées par des informations transmises par un circuit logique relié à chacune des N mémoires. Ce circuit logique reçoit ces informations en provenance d'une mémoire qui est programmée en fonction des différences de chemin entre chaque capteur et un point de focalisation de la réception.

Pour former un grand nombre de voies, avec ce dispositif suivant l'art antérieur, il faut utiliser un grand nombre de circuits de formation en parallèle.

Le dispositif, suivant l'invention, a l'avantage par rapport à ce dispositif, suivant l'art antérieur, de permettre l'utilisation d'un générateur d'adresses commun à tous les circuits de calcul, ce qui réduit considérablement le volume de matériel nécessaire, par rapport à l'art antérieur.

Selon l'invention, un dispositif numérique de formation de D voies spatiales pour un sonar ayant une antenne acoustique comportant N capteurs, ledit dispositif comprenant :

— des moyens d'échantillonnage et de multiplexage comportant N entrées dont chacune est reliée à l'un des capteurs, et une sortie fournissant séquentiellement des groupes de N échantillons des signaux reçus par les entrées,

— des moyens de mémorisation composés de plusieurs mémoires vives identiques, de nombre B, ayant un temps d'accès $t_0$ et dont chacune est agencée pour stocker un nombre prédéterminé d'échantillons, la capacité totale desdits moyens de mémorisation étant supérieure à la durée $\tau_{max}$ la plus grande des retards à réaliser pour la formation de voies,

— des moyens d'adressage pour l'écriture et la lecture de ces échantillons dans les mémoires vives, lesdits moyens comportant des moyens pour déterminer les adresses de lecture en fonction des retards nécessaires pour former les voies,

— des moyens de sommation combinant M échantillons lus dans les mémoires vives pour constituer un échantillon d'un signal de voie,
ledit dispositif étant caractérisé en ce que

— les mémoires vives sont reliées en série, la première étant reliée à la sortie des moyens d'échantillonnage et de multiplexage, et

— les moyens d'adressage comportent des générateurs d'adresses fournissant une suite d'adresses d'écriture identiques pour toutes les mémoires vives et une suite d'adresses de lecture identiques pour toutes les mémoires vives, lesdites adresses d'écriture étant telles qu'elles assurent des transferts d'échantillons à des intervalles de temps réguliers d'une mémoire vive à la suivante, lesdites adresses de lecture comportant deux parties fonction des retards ainsi que des périodes de temps $T_v$ entre les échantillons de signaux de voie de chaque voie, la première desdites parties étant destinée à sélectionner, parmi les mémoires vives, Q mémoires dont les échantillons sont utilisés dans la formation simultanée de Q échantillons de signal de voie d'une même voie tandis que la deuxième partie sélectionne, dans les mémoires sélectionnées, les échantillons utilisés dans la formation de ladite voie.

D'autres caractéristiques et avantages ressortiront de la description qui va suivre illustrée par les figures qui représentent :

— figure 1, un dispositif de formation de voies numérique, suivant l'art antérieur ;

— figure 2, une représentation temporelle des cycles écriture-lecture pour ce dispositif, suivant l'art antérieur ;

— figure 3, un schéma explicatif pour la formation de voies, suivant l'invention ;

— figure 4, une représentation temporelle des cycles écriture-lecture, suivant l'invention ;

— figure 5, un exemple de réalisation de dispositif de formation de voies, suivant l'invention ;

— figure 6, un exemple générateur d'adresses pour le dispositif de formation de voies, suivant l'invention ;

— figures 7 et 8, les diagrammes temporels des voies formées, suivant l'invention.

Il est connu que la surveillance d'un secteur angulaire par un sonar s'effectue par la formation de plusieurs voies directives pointées dans des directions prédéterminées, régulièrement espacées dans la plupart des cas.

Chaque voie formée est adaptée à une direction particulière d'indice k pour laquelle les retards électriques introduits par la formation de voie permettent la remise en synchronisme des signaux issus des différents capteurs de l'antenne lorsqu'une onde plane, ou sphérique si l'antenne est destinée à travailler en champ proche, provient de la direction repérée par l'indice « k ».

Après introduction des retards électriques, les signaux de réception sont pondérés en amplitude et additionnés, soit :

$$V_k(t) = \Sigma_i A_{ik} \cdot s_i(t - \tau_{ik}) \qquad (1)$$

où $V_k(t)$ est le signal temporal de la voie « k » calculé à l'instant t, $s_i(t)$ est le signal temporel reçu par le capteur d'indice « i » à l'instant t, $A_{ik}$ est un coefficient de pondération d'amplitude qui dans certaines applications ne dépend que de l'indice « i » et $\tau_{ik}$ est le retard électrique appliqué au signal du capteur « i » pour former la voie « k ».

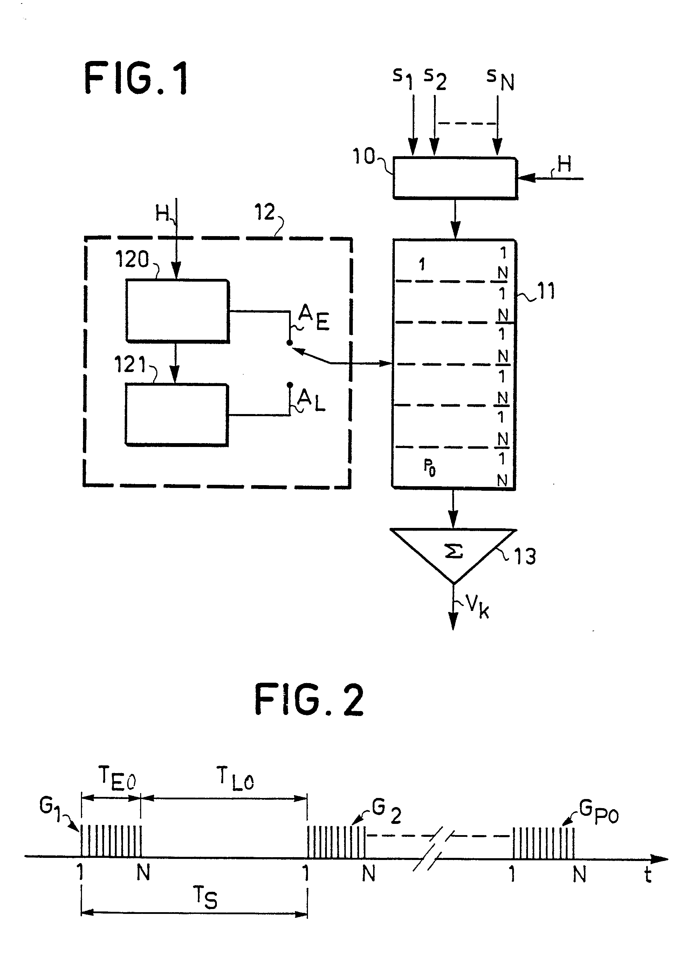

La figure 1 représente le synoptique de formation de voies, suivant l'art antérieur. Les échantillons numériques des signaux $s_1, ... s_i, ... s_N$ fournis par les N capteurs sont multiplexés séquentiellement dans un multiplexeur 10, piloté par une horloge H, et sont stockés dans une mémoire vive à accès aléatoire 11, type RAM. Un générateur d'adresses 12 fournit les adresses d'écriture $A_E$ et de lecture $A_L$ à cette mémoire 11. Cette mémoire travaille alternativement en mode écriture et en mode lecture. Le mode écriture correspond à l'acquisition des N échantillons en sortie du multiplexeur 10. Le mode de lecture est utilisé pour le calcul des voies, qui sont obtenues en sortie d'un sommateur 13, recevant les échantillons lus dans la mémoire 11 aux adresses où sont stockés les échantillons ayant les retards nécessaires à la voie à former.

La figure 2 représente le séquencement écriture-lecture au niveau de la mémoire. La période $T_S$ représente la période d'échantillonnage de chaque signal de capteur. Le temps $T_{EO}$ correspond à la durée d'écriture des N échantillons et le temps de lecture $T_{LO} = T_S - T_{EO}$.

En écriture, la mémoire est gérée de manière à ce que entre deux périodes $T_S$ l'adresse d'écriture $A_E$ soit incrémentée de N, les échantillons étant rangés successivement à partir de cette adresse. La mémoire 11 se trouve ainsi remplie d'une succession de $P_O$ groupes $G_1, ... G_{P_O}$ de N échantillons séparés d'un temps $T_S$. Soit $\tau_{max}$ la plus grande valeur des retards $\tau_{ik}$. On pose $A \cdot T_S = \tau_{max}$. Cette valeur $A \cdot T_S$ sera désignée par la suite par profondeur d'antenne. Pour former toutes les voies il faut que $P_O$ soit supérieur ou égal à A.

Les adresses d'écriture $A_E$ pour les P groupes de N échantillons sont fournies par un compteur 120, recevant les signaux d'horloge H.

En lecture, un échantillon de signal de la voie « k » est formé en lisant un échantillon de chaque capteur « i » dans les groupes correspondant aux retards $\tau_{ik}$. Pour cela le générateur d'adresses 121 fournit à la mémoire 11 les adresses de lecture $A_L$ des M échantillons nécessaires pour former un échantillon de voie car généralement on n'utilise pour former chaque voie qu'une partie des N capteurs de l'antenne. Le générateur d'adresses 121 effectue l'addition de l'adresse d'écriture, qui s'incrémente d'une unité à chaque période d'échantillonnage $T_S$ du signal d'entrée, avec les retards quantifiés $\tau_{ik}$ lus dans une mémoire à lecture seule d'accès aléatoire, type PROM. Cette mémoire des retards fournit également l'indice i du capteur à utiliser à chaque étape du calcul et éventuellement la pondération d'amplitude $A_{ik}$ à appliquer aux signaux $s_1, ... s_N$ des capteurs avant sommation, suivant la relation (1). Chaque signal $V_k(t)$, défini suivant cette relation (1), constitue ce que l'on appelle un échantillon temporel à l'instant t de la voie spatiale k.

Pour chaque voie il faut obtenir au moins un tel échantillon pendant une période $T_v$, où $T_v$ correspond à la règle de Shannon : $T_v = 1/2B$, B étant la bande passante nécessaire. La période d'échantillonnage $T_S$ est déterminée par la précision nécessaire pour les retards et l'on a généralement $T_S \leqslant T_v$.

Il en résulte que pendant le temps de lecture-calcul $T_L$ on ne peut calculer que K voies, où K est donné par la relation :

$$K < \frac{1}{M} \cdot \frac{T_v}{T_S} \left[ \frac{T_S}{t_0} - N \right] \qquad (2)$$

où M est le nombre d'échantillons pris pour former une voie et $t_0$ le temps du cycle élémentaire en lecture ou en écriture de la mémoire 11. A titre d'exemple si l'on prend :

$N = 64$, $M = 24$, $T_S = 16$ μs, $T_V = 32$ μs et $t_0 = 0,125$ μs ;

On trouve :

3

**0 109 869**

K = 5.

Pour former un plus grand nombre de voies, suivant l'art antérieur, il faut utiliser plusieurs dispositifs en parallèle, chaque mémoire stockant des échantillons de capteurs identiques sur une durée égale, comme précédemment, à la profondeur d'antenne.

Si l'antenne possède une symétrie circulaire, les différents circuits de calcul peuvent être pilotés par un même générateur d'adresses. Cependant si les voies préformées doivent être stabilisées, en corrigeant les mouvements de l'antenne, en roulis et tangage par exemple, la symétrie circulaire disparaît. Pour une antenne quelconque, il y aura donc autant de générateurs d'adresses, tels que 12, que de circuits formateurs, un circuit formateur étant défini comme l'ensemble mémoire 11 et sommateur 13. Or actuellement un générateur d'adresses comporte 2 à 3 fois plus de composants qu'un circuit formateur, ce qui conduit à des volumes de matériel importants.

Le dispositif numérique de formation de voies, suivant l'invention permet de réduire le volume matériel même dans le cas d'antennes de forme quelconque et de stabilisation des voies en cas de mouvement de la plateforme supportant l'antenne.

Suivant l'invention, une disposition particulière des boîtiers mémoires et le stockage d'une tranche temporelle du signal supérieure à la profondeur d'antenne permettent d'obtenir simultanément plusieurs échantillons temporels d'une même voie spatiale au cours d'un même adressage de ces mémoires.

Le générateur d'adresse est unique, donc beaucoup plus simple que celui qui est nécessaire pour former simultanément plusieurs voies spatiales selon l'art antérieur.

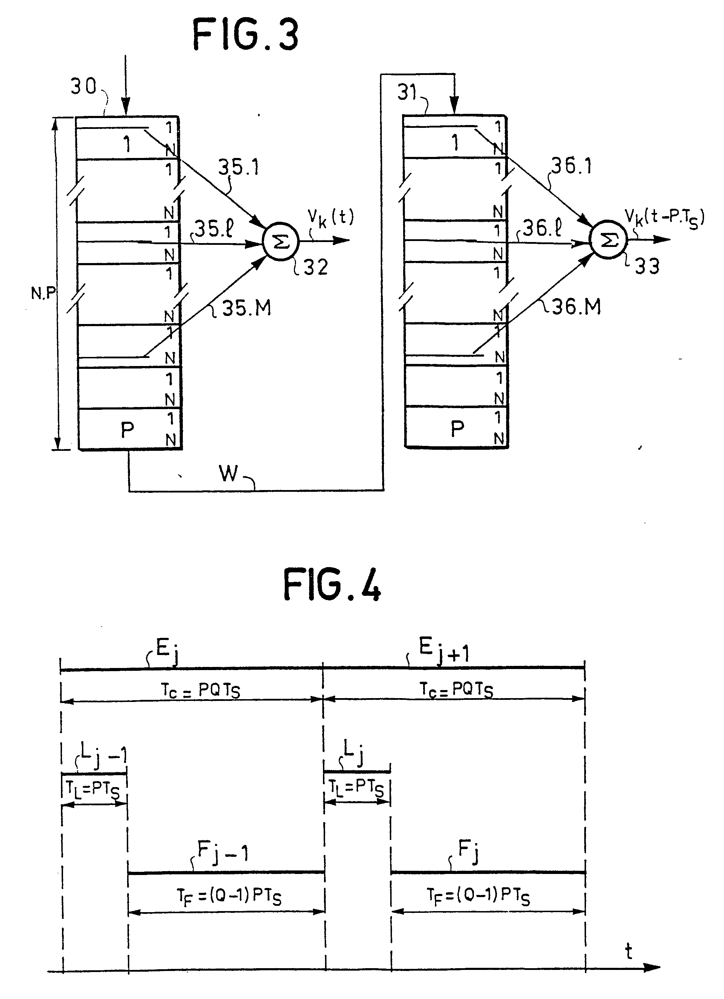

Sur la figure 3 on a représenté deux mémoires 30 et 31 mises en série et associées chacune à un sommateur, respectivement 32 et 33. Soit P le nombre de groupes de N échantillons (il est déterminé par la taille du module de mémoire choisi) contenus dans chacune de ces mémoires. La tranche de temps correspondant à chaque mémoire est donc $PT_S$. On considère que les échantillons stockés dans ces deux mémoires correspondent à deux tranches de temps successives : donc à la même adresse les deux mémoires contiennent des échantillons du même capteur d'antenne d'indice i mais dont les âges diffèrent de $PT_S$, ce qui est réalisable par exemple en alimentant « en série » la mémoire 31 par la sortie W de la mémoire 30.

Autrement dit les échantillons contenus dans la mémoire 30 sont plus récents que ceux contenus dans la mémoire 31 de la durée $PT_S$.

Pour former un échantillon d'une voie, il faut disposer des échantillons de M capteurs, nombre généralement inférieur au nombre total N des capteurs, dont les adresses sont distantes au plus de $N \times A$, A étant la profondeur d'antenne évaluée en nombre de périodes $T_S$.

En se rapportant à la figure 3, un échantillon de la voie de direction k relatif à un instant t est formé par l'addition de M échantillons 35.1, ... 35.$\ell$ ... 35.M prélevés successivement dans la mémoire 30 à des adresses dépendant de l'indice i de chaque capteur, de l'indice k de la voie et également de $t/T_S$. Les mêmes adresses appliquées à la mémoire 31 permettent le calcul d'un échantillon de voie de la même direction k mais à l'instant $t-PT_S$, en prélevant les échantillons 36.1, ... 36.$\ell$, ... 36.M. On peut étendre ce principe à Q circuits formateurs commandés par un générateur d'adresses unique. Chaque mémoire est utilisée pour calculer des échantillons intermédiaires de chaque voie d'indice k pour des instants d'échantillonnage espacés régulièrement de $T_v$ à l'intérieur d'une période $PT_S$, $T_v$ étant un multiple de $T_S$ et un sous-multiple de $PT_S$. Le rapport $T_v/T_S$ est un entier généralement compris entre 2 et 8.

En raison de la profondeur d'antenne et du fait que les mémoires du type 30 et 31 contiennent des tranches temporelles adjacentes chaque circuit de pondération et d'addition doit en réalité avoir accès à au moins 2 mémoires adjacentes ce qui entraîne la nécessité de placer des circuits sélecteurs de mémoires et d'avoir au moins Q + 1 mémoires disponibles. Les circuits sélecteurs de mémoire sont commandés en synchronisme par le générateur d'adresses. Si la profondeur d'antenne est supérieure à $PT_S$ chaque circuit de sommation doit avoir accès à plus de 2 mémoires.

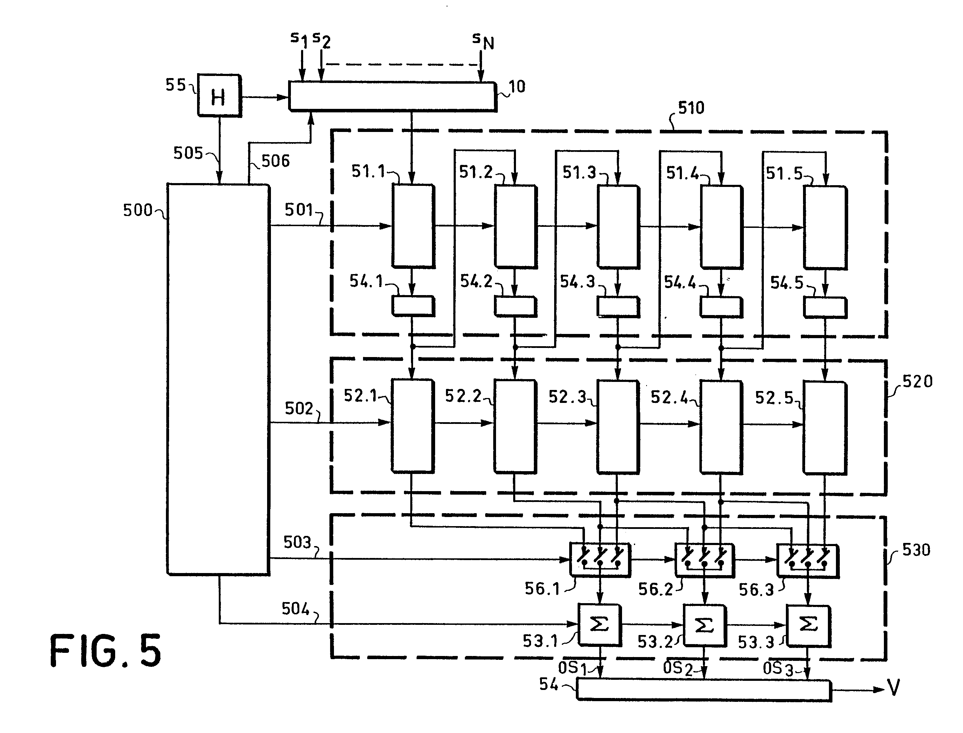

Un exemple du dispositif de formation de voies, suivant l'invention, est montré par la figure 5.

Il comporte un générateur d'adresses 500, deux mémoires vives, de type RAM, 510 et 520, appelées respectivement mémoire d'acquisition et mémoire de formation et un ensemble de sommation 530.

Les deux mémoires 510 et 520 et l'ensemble de sommation 530 sont agencés pour constituer un nombre de circuits formateurs, égal au nombre d'opérateurs 53.1, 53.2 et 53.3 de l'ensemble 530. Un opérateur est le circuit qui réalise les opérations $\Sigma_i A_{ik} s_i$ suivant la relation (1). La figure correspond à titre d'exemple à Q = 3. Chaque mémoire comporte B blocs-mémoires : 51.m et 52.m, avec m = 1 à B. Le nombre B est supérieur à Q et dépend du rapport entre la durée P des tranches élémentaires et de la profondeur d'antenne A comptées en périodes de $T_S$. Sur la figure 5 on a pris B = 5.

La sortie de chaque bloc 51.m de la mémoire d'acquisition est connectée à l'entrée du bloc correspondant 52.m de la mémoire de formation. Dans la mémoire acquisition 510 sont écrits les échantillons des capteurs fournis par le multiplexeur 10. Dans la mémoire de formation 520 sont lus les échantillons des capteurs, et les sorties des blocs de cette mémoire sont connectées à l'ensemble de sommation 530. Le générateur d'adresses 500 est commun aux deux mémoires 510 et 520 auxquelles il fournit l'adressage et les signaux de commande écriture-lecture.

La mémoire acquisition 310 est conçue comme une ligne à retard à une entrée et B sorties (B = 5). Sur la figure 5 l'ancienneté des échantillons croît de gauche à droite : le premier bloc reçoit en série les

4

échantillons des capteurs et les échantillons sont transférés d'un bloc au bloc adjacent situé immédiatement à droite. Ces transferts sont réalisés par cycles élémentaires lecture-écriture échantillon par échantillon : au cours du cycle lecture on lit dans les blocs-mémoires 51.1 ... 51.B et on stocke simultanément dans des registres tampons 54.1 ... 54.B un échantillon par bloc ; au cours du cycle écriture on écrit un échantillon dans chaque bloc 51.1, ... 51.B. L'adressage commun à tous les blocs est effectué par incrémentation de I (modulo P × N) après chaque écriture.

Le nombre B de mémoires qui est supérieur au nombre Q de circuits formateurs est donné par :

$$B = Q + 1 + \text{partie entière } (A/P) \qquad (3)$$

L'ensemble de sommation 530 comporte Q circuits sélecteurs 56.1 ... 56.Q à plusieurs entrées et une sortie. Le nombre d'entrées correspond au nombre de blocs-mémoires adjacents qui est égal à 1 + partie entière (A/P). Ces circuits permettent d'aiguiller une seule sortie de mémoire vers l'opérateur et ils sont commandés par le générateur d'adresses comme précisé plus loin.

Aux Q sorties OS, ... $OS_Q$ de l'ensemble de sommation 530, on dispose au même instant de Q échantillons de la même voie spatiale et ces échantillons sont mis en série au moyen d'un multiplexeur 54 sur la sortie unique V. Ils sont disponibles pour être exploités, par exemple, par un ensemble de visualisation non représenté.

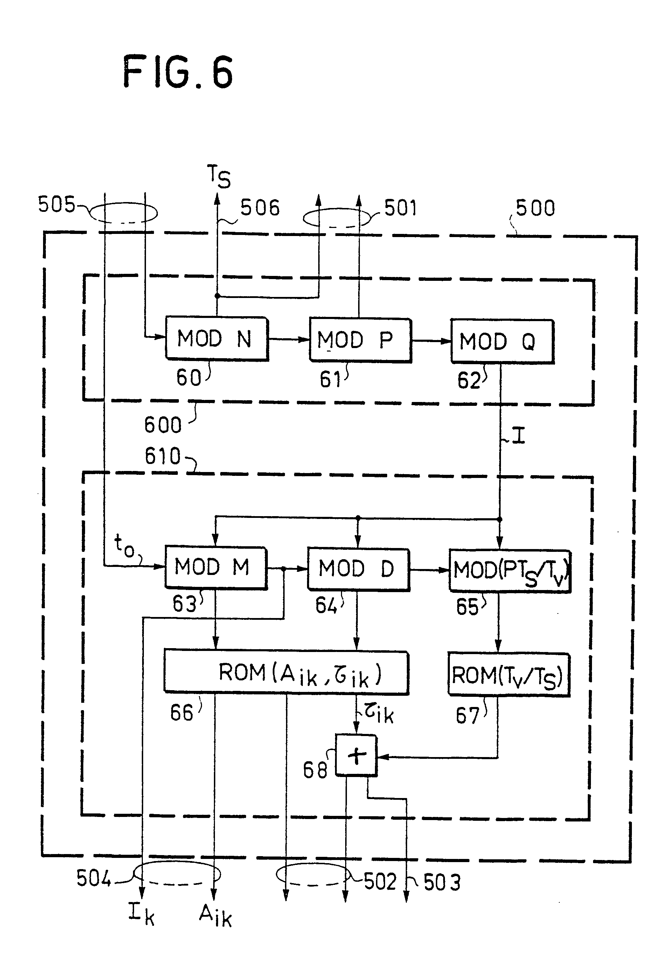

Le générateur d'adresses est schématiquement représenté sur la figure 6, il comporte deux chaînes, la première chaîne 600 générant les adresses des blocs-mémoires d'acquisition dont la fréquence d'écriture et de lecture est égale à $N/T_S$ tandis que la deuxième chaîne 610 délivre les adresses des blocs-mémoires de formation de voies.

La première chaîne comprend un compteur 60 modulo N qui reçoit en 505 le signal d'horloge à la fréquence $N/T_S$ et qui délivre à la sortie 506 un signal de période $T_S$, pour le multiplexeur 10 (figure 5). Les adresses d'écriture dans la mémoire d'acquisition 510 sont fournis à la sortie 501 par le compteur 60 modulo N et un compteur 61 modulo P, le compteur 61 recevant les signaux de sortie du compteur 60. Le signal de sortie du compteur modulo P est appliqué à un compteur 62 modulo Q, qui délivre à la sortie le signal I d'initialisation de la seconde chaîne 610.

Lorsque le nombre N de capteurs constituant l'antenne est une puissance de 2, la réalisation de la première chaîne de génération d'adresses est simplifiée.

La deuxième chaîne de génération d'adresses comprend un compteur 63 modulo M qui reçoit en 505 les signaux d'horloge à la période $t_0$. Un compteur 64 modulo D, où D est le nombre de voies à former, reçoit les signaux de sortie du compteur 63. Les deux compteurs 63 et 64 fournissent les adresses appliquées à une mémoire morte 66 contenant la table des retards électriques $\tau_{ik}$, les indices « i » des capteurs à utiliser et la pondération d'amplitude $A_{ik}$ à appliquer aux signaux suivant la relation (1). Un troisième compteur 65 modulo $PT_S/T_v$, alimenté par le compteur 64 fournit un décalage, que l'on additionne en 68 à $\tau_{ik}$ pour obtenir le retard vrai. Le décalage augmente de la quantité $T_v/T_S$ fournie par la mémoire 67 à chaque impulsion du compteur 64. La mémoire morte 67 est alimentée par la sortie du compteur 65. Les bits de fort poids délivrés par l'additionneur 68 correspondant à un dépassement de la capacité du bloc-mémoire de formation sont utilisés pour la commande des sélecteurs de blocs-mémoires en 503.

Les adresses sont données, d'une part en sortie 503 pour un adressage grossier aux sélecteurs 56.1, ... 56.Q et d'autre part en 502 pour un adressage fin modulo NP aux mémoires de formation 52.1, ... 52.Q. La sortie 504 fournit les pondérations d'amplitude et un signal de remise à zéro $I_k$ commandé par le compteur 63 de modulo M.

Le fonctionnement du dispositif, suivant l'invention, est schématisé sur les figures 4, 7 et 8.

La mémoire acquisition 510 acquiert en permanence les échantillons des capteurs à la cadence $T_S/N$. La mémoire d'acquisition stocke une tranche temporelle T du signal de chaque capteur égale à $BPT_S$ dont la valeur est plus grande que la profondeur d'antenne $A.T_S$.

Le nombre d'échantillons par bloc 51.m étant égal à N.P, le remplissage d'un bloc est effectué dans un temps $PT_S$. Comme indiqué sur la figure 4, le dispositif fonctionne par cycles de durée $T_c$ dont la durée correspond au temps qui est nécessaire pour renouveler les échantillons de capteurs. Au cours de chaque cycle $T_c$, on remplit Q blocs de la mémoire d'acquisition de sorte que $T_c = PQT_S$.

Les deux mémoires d'acquisition et de formation fonctionnent sur des cycles de durée $T_c$.

Un cycle commence par le transfert du contenu des blocs-mémoires 51.1 ... 51.B dans les blocs-mémoires 52.1 ... 52.B et cela bloc à bloc, les blocs 51.m recevant les mêmes adresses que les blocs 52.m. Cette phase $L_j$ a une durée $T_L = PT_S$ et le fonctionnement de la mémoire acquisition n'est pas modifié pendant le chargement de la mémoire de formation. Au cours de cette phase de transfert la mémoire de formation 520 reçoit les adresses de la première chaîne du générateur d'adresses 500.

A la fin de la phase transfert $L_j$ la mémoire 520 est utilisée en lecture seule pour la formation des voies pendant la phase de formation $F_j$. La durée de cette phase $F_j$ est $T_F$.

Pendant le cycle correspondant à l'acquisition des échantillons de capteurs $E_j$, on effectue le transfert $L_{j-1}$ des échantillons de capteurs $E_{j-1}$ suivi de la formation des échantillons de voies $F_{j-1}$.

Pendant le cycle correspondant à l'acquisition des échantillons de capteurs $E_{j+1}$, on effectue le transfert $L_j$ des échantillons de capteurs $E_j$ suivi de la formation des échantillons de voies $F_j$.

5

Puisque le nombre B de blocs-mémoires est supérieur au nombre Q d'opérateurs, il y a un recouvrement de durée $(B-Q) \cdot P \cdot T_S$ entre les tranches temporelles transférées dans la mémoire de formation de chaque cycle de durée $Q.P.T_S$. Si la profondeur d'antenne $AT_S$ est inférieure à $PT_S$ on a $B = Q + 1$ et il y a au moins un recouvrement de durée $PT_S$.

Pendant la phase de formation $F_j$, les fréquences de fonctionnement des deux chaînes 600 et 610 du générateur d'adresses peuvent être différentes, la deuxième chaîne recevant l'ordre d'initialisation I à la fin du transfert.

Généralement le circuit de formation de voies est spécifié pour former un nombre déterminé D de voies spatiales $V_k(t)$ échantillonnées à la période $T_v$, chaque voie étant formée à partir de M capteurs. Sachant que l'on utilise des composants mémoires de temps d'accès ou cycle élémentaire $t_0$, on en déduit le nombre Q de circuits formateurs à utiliser pour obtenir simultanément Q échantillons temporels d'une même voie spatiale.

En effet, au cours d'un cycle $T_C$, le dispositif fournit Q échantillons de la même voie spatiale décalés temporellement de $PT_S$, soit $V_k(t)$, $V_k(t-PT_S)$ ... $V_k(t-T_C)$. Il y a à calculer, pour chaque voie spatiale, $PT_S/T_v$ échantillons de voies en comptant les échantillons intermédiaires.

Le calcul d'un échantillon de voie, soit de la même voie spatiale, soit d'une voie spatiale différente, a une durée égale à $Mt_0$. La durée de calcul de $PT_S/T_v$ échantillons de voies pour D voies est donc égale à $PT_S/T_v$ $DMt_0$. L'égalité de la durée $T_F$ et de cette durée de calcul fournit le nombre Q de circuits formateurs soit :

$$Q = 1 + D.M.t_0/T_v \tag{4}$$

Ce nombre est indépendant de la taille NP des blocs-mémoires d'acquisition et de formation. Seul le nombre B-Q de blocs mémoires additionnels dépend de cette taille et de la profondeur d'antenne A, exprimée en périodes d'échantillonnage des capteurs. B-Q se déduit de la relation (3).

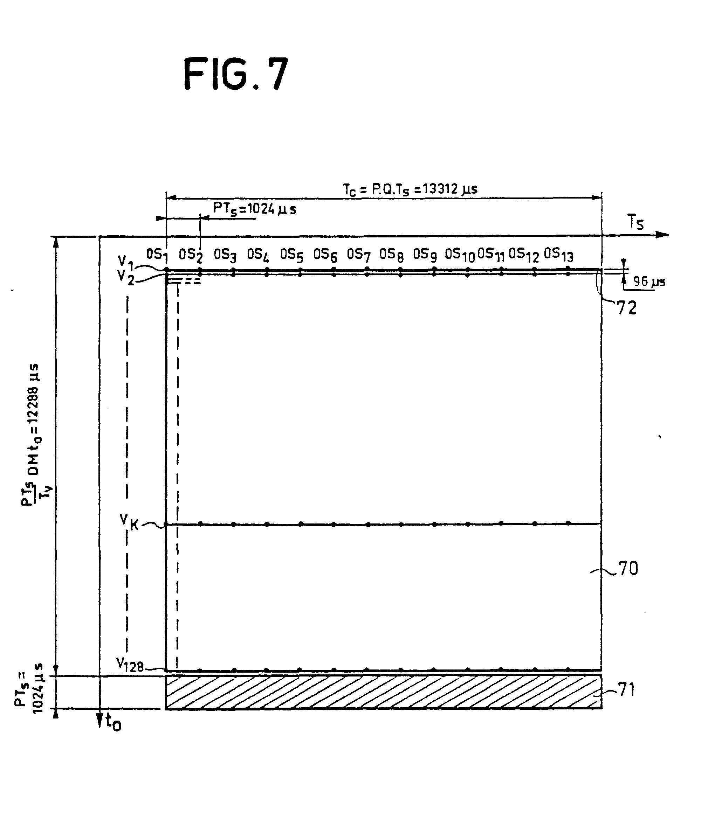

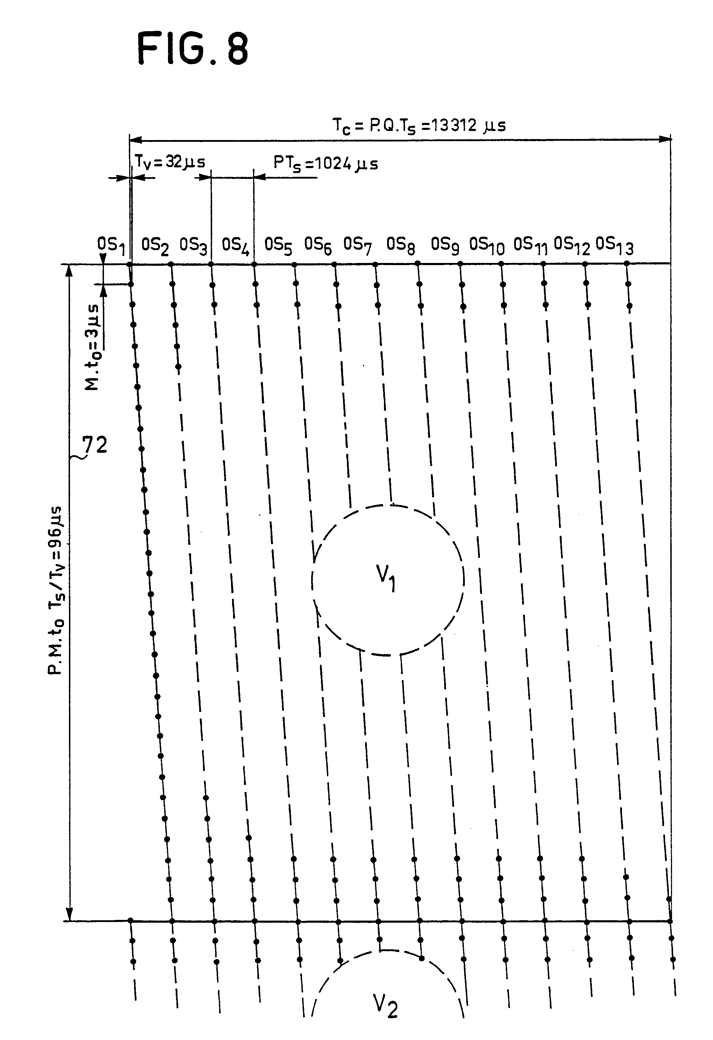

Pour aider la compréhension du fonctionnement on se reportera aux figures 7 et 8 qui représentent, horizontalement, les instants comptés en périodes $T_S$ en fonction verticalement, des instants comptés en cycles élémentaires $t_0$ pour les échantillons de voies calculés au cours de chaque cycle $T_c$. La partie 70 correspond à la phase de calcul et la partie 71 à la phase de transfert.

Sur ces figures, les échantillons sont représentés par des points. La figure 8 est un détail de l'échelle verticale de la partie 72 de la figure 7, celui, par exemple, du cycle de calcul de tous les échantillons de la voie spatiale $V_I$.

Les valeurs correspondantes à l'exemple d'application choisi sont les suivantes :
— $T_S$ = période d'échantillonnage des signaux reçus = 16 µs
— $T_v$ = période d'échantillonnage des voies formées = 32 µs
— $t_0$ = temps de cycle élémentaire de la mémoire formation = 0,125 µs
— D = nombre de voies formées = 128
— N = nombre de capteurs = 64
— M = nombre de capteurs utilisés pour une voie = 24
— A = profondeur d'antenne = $83T_S$
— taille mémoire = 4 096 mots soit NP = 4 096, P = 64
Pour cet exemple, on obtient ;
— Q = nombre de circuits formateurs = 13
— B = nombre de blocs-mémoires = 15
— $T_c$ = période de renouvellement des échantillons de capteurs d'eau dans Q blocs de la mémoire d'acquisition = 13 312 µs
— $PT_S/T_v = 32$

L'intervalle de temps entre deux sorties d'échantillons de voies est $Mt_0 = 3$ µs. Par conséquent, la fréquence du multiplexeur 54 est supérieure à $1/Mt_0$.

Chaque opérateur à accès à $B — Q + 1 = 3$ blocs adjacents.

Tel que représenté sur les figures 7 et 8, on calcule tous les échantillons d'une même voie spatiale $V_k$ décalés temporellement de $T_v$, puis tous les échantillons de la voie spatiale $k + 1$, ainsi de suite.

Suivant une variante de fonctionnement, on peut modifier l'ordre de calcul des échantillons des voies. Par exemple, après avoir calculé les 13 premiers échantillons de la voie $V_1$ de la figure 8, on calcule alors les 13 premiers échantillons de la voie $V_2$, et ainsi de suite jusqu'à la voie $V_{128}$. On calcule alors la deuxième ligne de la voie $V_1$, puis la deuxième ligne de la voie $V_2$, etc... D'autres variantes combinant ces deux ordres de calcul sont également possibles.

Avec le générateur d'adresses tel que décrit précédemment, les directions des D voies spatiales sont fixes par rapport à l'antenne. Il est possible de former des voies dans des directions variables au cours du temps, soit pour compenser les mouvements de la plateforme supportant l'antenne, soit pour poursuivre des sources mobiles. Pour cela la mémoire morte 66 contenant les adresses des capteurs i et $\tau_{ik}$ doit être remplacée par une mémoire vive rafraîchie périodiquement par un calculateur, recevant les paramètres de position de cette plateforme mobile. Ainsi une voie $V_k$ étant définie par exemple par des coordonnées sphériques absolues et les angles de rotation du bateau étant mesurés, un calculateur détermine les coordonnées sphériques des voies relatives au bateau. A partir de ces valeurs connaissant la géométrie de l'antenne le calculateur détermine les valeurs de $\tau_{ik}$ qui sont stockées dans la mémoire vive. Cette période de renouvellement doit être égale ou multiple de la durée du cycle $T_c$ pendant laquelle les circuits formateurs de voies calculent simultanément plusieurs échantillons temporels de la même voie. Dans l'application numérique précédente la durée du cycle $T_c$ est de l'ordre de 13 millisecondes ce qui permettrait de conserver une précision de pointage à 0,1 degré près jusqu'à des vitesses angulaires de 7,5 degrés par seconde.

Le dispositif suivant l'invention est particulièrement avantageux pour la formation des voies de veille d'un sonar utilisant une antenne conforme, c'est-à-dire qui épouse la forme de la coupe du navire ou du sous-marin. En reprenant les paramètres de l'application numérique précédente dans le cas où des signaux d'entrée sont codés à un bit par écrêtage et utilisant des boîtiers à accès aléatoire de taille 4 096 mots de 4 bits, on atteint un volume de l'ordre d'une centaine de boîtiers pour le multiplexage d'entrée, la formation des voies et le générateur d'adresses.

Suivant l'art antérieur le nombre de boîtiers aurait été de l'ordre de 250 boîtiers en utilisant au mieux la symétrie gauche-droite qui existe généralement dans une antenne conforme.

**Revendications**

1. Dispositif numérique de formation de D voies spatiales pour un sonar ayant une antenne acoustique comportant N capteurs, ledit dispositif comprenant :
— des moyens (10) d'échantillonnage et de multiplexage comportant N entrées dont chacune est reliée à l'un des capteurs, et une sortie fournissant séquentiellement des groupes de N échantillons des signaux reçus par les entrées,
— des moyens (30, 31 ; 510, 520) de mémorisation composés de plusieurs mémoires vives identiques, de nombre B, ayant un temps d'accès $t_0$ et dont chacune est agencée pour stocker un nombre prédéterminé d'échantillons, la capacité totale desdits moyens de mémorisation étant supérieure à la durée $\tau_{max}$ la plus grande des retards à réaliser pour la formation de voies,
— des moyens (500) d'adressage pour l'écriture et la lecture de ces échantillons dans les mémoires vives, lesdits moyens comportant des moyens (610) pour déterminer les adresses de lecture en fonction des retards nécessaires pour former les voies,
— des moyens (32, 33 ; 53.1-53.3) de sommation combinant M échantillons lus dans les mémoires vives pour constituer un échantillon d'un signal de voie,
ledit dispositif étant caractérisé en ce que
— les mémoires vives sont reliées en série, la première étant reliée à la sortie des moyens d'échantillonnage et de multiplexage, (10) et
— les moyens d'adressage comportent des générateurs d'adresses (600, 610) fournissant une suite d'adresses d'écriture identiques pour toutes les mémoires vives et une suite d'adresses de lecture identiques pour toutes les mémoires vives, lesdites adresses d'écriture étant telles qu'elles assurent des transferts d'échantillons à des intervalles de temps réguliers d'une mémoire vive à la suivante, lesdites adresses de lecture comportant deux parties fonction des retards ainsi que des périodes de temps $T_v$ entre les échantillons de signaux de voies de chaque voie, la première desdites parties étant destinée à sélectionner, parmi les mémoires vives, Q mémoires dont les échantillons sont utilisés dans la formation simultanée de Q échantillons de signal de voie d'une même voie tandis que la deuxième partie sélectionne, dans les mémoires sélectionnées, les échantillons utilisés dans la formation de ladite voie.

2. Dispositif selon la revendication 1, caractérisé en ce que, chaque mémoire vive (51.1, 52.1) comprend deux sections (51.1 à 51.5 et 52.1 à 52.5), toutes les premières sections (51.1 à 51.5) recevant la suite d'adresses d'écriture, toutes les secondes sections (52.1 à 52.5) recevant également la suite d'adresses d'écriture pendant une phase $T_L$ de transfert des échantillons des premières sections vers les secondes sections et recevant la suite d'adresses de lecture pendant une phase $T_F$ de formation des voies, après la phase de transfert ; en ce que les moyens de sommation (530) comportent Q additionneurs (53.1 à 53.3) et Q sélectionneurs (56.1 à 56.3), chacun des sélectionneurs établissant une liaison entre l'une des Q mémoires vives sélectionnées et l'un des Q additionneurs, sous la commande de la première partie de l'adresse de lecture.

3. Dispositif selon l'une des revendications 1 ou 2, caractérisé en ce que les générateurs d'adresses (600, 610) comportent :
— un premier compteur (60) modulo M, recevant un signal d'horloge au rythme de l'échantillonnage des signaux des capteurs, et fournissant un signal de commande aux moyens d'échantillonnage et de multiplexage (10) ;
— un second compteur (61) modulo P, P étant le nombre de groupes de n échantillons stockés dans chacune des mémoires vives (30, 31 ; 51.1, 52.1), le premier et le second compteur (60 et 61) fournissant la suite d'adresses d'écriture ;
— un troisième compteur (62) modulo Q, recevant un signal de commande fourni par le second compteur (61) et fournissant un signal d'initialisation lors du dépassement de sa capacité de comptage ;
— un quatrième compteur (63) modulo M, recevant un signal d'horloge à la cadence $t_0$ ;
— un cinquième compteur (64) modulo D, recevant le signal de dépassement fourni par le quatrième

7

compteur (63) ;

— une mémoire de paramètres (66) contenant les valeurs de retard et des valeurs de pondération correspondant aux voies à former, recevant une adresse constituée par le contenu du quatrième et du cinquième compteur (63 et 64) ;

— un générateur de décalages (65, 67) fournissant un signal de décalage correspondant à l'intervalle de temps $T_V$, les deux parties desdites adresses de lecture étant constituées respectivement par les bits de plus fort poids et par les bits de plus faible poids de la combinaison du signal de décalages avec le signal de sortie de la mémoire de paramètres (66).

4. Dispositif selon la revendication 3, caractérisé en ce que la mémoire de paramètres (66) est une mémoire vive recevant des valeurs de paramètres déterminées par un calculateur en fonction de la position de l'antenne du sonar.

## Claims

1. A digital device for constituting D spatial channels for a sonar having an acoustic antenna composed of N probes, this device including :

— sampling and multiplexing means (10) comprising N inputs, each of which is connected to one of the probes, and an output sequentially supplying groups of N samples of signals received via the inputs,

— storage means (30, 31 ; 510, 520) composed of B identical active memories having an access time $t_0$ and each one being conceived for storing a predetermined number of samples, the total capacity of said storage means exceeding the longest duration $\tau_{max}$ of the delays to be realized in view of the constitution of channels,

— addressing means (500) for writing and reading these samples in the active memories, these means comprising means (610) for determining the read addresses in accordance with the delays necessary for constituting the channels,

— summing means (32, 33 ; 53.1-53.3) combining N samples read from the active memories in order to constitute a channel signal sample,
characterized in that

— the active memories are connected in series, the first one being connected to the sampling and multiplexing means (10),

— and the addressing means comprise address generators (600, 610) supplying a sequence of write addresses which are identical for all the active memories, and a sequence of read addresses which are identical for all the active memories, these write addresses being such that they ensure the transfer of samples at regular time intervals from one active memory to the next one, said read addresses comprising two parts in accordance with the delays and the time periods $T_V$ between the samples of channel signals of each channel, the first part being intended to select Q memories out of the active memories, the samples of which are used in the simultaneous constitution of Q channel signal samples of a unique channel, whereas the second part selects in the selected memories the samples used in the constitution of the channel.

2. A device according to claim 1, characterized in that each active memory (51.1, 52.1) includes two sections (51.1 to 51.5 and 52.1 to 52.5), all the first sections (51.1 to 51.5) receiving the sequence of write addresses, all the second sections (52.1 to 52.5) receiving also the sequence of write addresses during a phase $T_L$ during which the samples are transferred from the first sections to the second sections, and receiving the sequence of read addresses during a phase $T_F$ following the transfer phase during which the channels are constituted, and that the summing means (530) include Q adders (53.1 to 53.3) and Q selectors (56.1 to 56.3), each one of the selectors establishing a connection between one of the Q selected active memories and one of the Q adders under control of the first part of the read address.

3. A device according to one of claims 1 or 2, characterized in that the address generators (600, 610) comprise :

— a first counter (60) modulo M receiving a clock signal at the probe signal sampling frequency and supplying a control signal to the sampling and multiplexing means (10),

— a second counter (61) modulo P, P being the number of groups of n samples stored in each one of the active memories (30, 31 ; 51.1, 52.1), the first and the second counter (60 and 61) supplying the sequence of write addresses,

— a third counter (62) modulo Q receiving a control signal supplied by the second counter (61) and supplying an initialisation signal, when it reaches its maximum counting capacity,

— a fourth counter (63) modulo M receiving a clock signal at the frequency $t_0$,

— a fifth counter (64) modulo D receiving the overflow signal supplied by the fourth counter (63),

— a parameter memory (66) containing the delay values and weighting values corresponding to the channels to be constituted, this memory receiving an address constituted by the content of the fourth and of the fifth counter (63 and 64),

— a shift generator (65, 67) supplying a shift signal corresponding to the time interval $T_V$, the two parts of said read addresses being constituted respectively by the higher order bits and by the lower order bits of the combination of the shift signal with the output signal of the parameter memory (66).

# 0 109 869

4. A device according to claim 3, characterized in that the parameter memory (66) is an active memory which receives the parameter values determined by a computer in accordance with the antenna position of the sonar.

## Patentansprüche

1. Digitale Vorrichtung zur Bildung von D Raumkanälen für ein Sonargerät mit einer akustischen Antenne, die N Sonden enthält, wobei die Vorrichtung aufweist :
— Tast- und Multiplexiermittel (10) mit N Eingängen, die je an eine der Sonden angeschlossen sind, und mit einem Ausgang, der in Reihe Gruppen von N Tastproben der über die Eingänge empfangenen Signale liefert,
— Speichermittel (30, 31 ; 510, 520), die aus B gleichartigen Aktivspeichern mit einer Zugriffszeit $t_0$ bestehen und die je zur Speicherung einer vorgegebenen Zahl von Tastproben ausgerüstet sind, wobei die Gesamtkapazität der Speichermittel größer als die längste Verzögerungszeit $\tau_{max}$ ist, die für die Kanalbildung erforderlich ist,
— Adressiermittel (500) für das Einschreiben und Lesen dieser Tastproben in diesen Aktivspeichern, wobei diese Mittel Mittel (610) aufweisen, um die Leseadressen abhängig von den für die Kanalbildung erforderlichen Verzögerungen zu bestimmen,
— Summiermittel (32, 33 ; 53.1 bis 53.3), die M aus den Aktivspeichern ausgelesene Tastproben miteinander kombinieren und eine Tastprobe eines Kanalsignals bilden,
dadurch gekennzeichnet, daß
— die Aktivspeicher in Reihe miteinander verbunden sind, wobei der erste an den Ausgang der Tast- und Multiplexiermittel (10) angeschlossen ist,
— und die Adressiermittel Adressengeneratoren (600, 610) eine Folge von für alle Aktivspeicher gleichen Schreibadressen und eine Folge von für alle Aktivspeicher gleichen Leseadressen liefern, wobei die Schreibadressen so festgelegt sind, daß sie die Übertragung von Tastproben in regelmäßigen Zeitintervallen von einem Aktivspeicher auf den nächsten bewirken, und wobei die Leseadressen zwei Teile in Abhängigkeit von den Verzögerungen sowie den Zeitperioden $T_v$ zwischen den Kanalsignaltastproben jedes Kanals aufweisen, deren erster Teil zur Auswahl von Q Aktivspeichern bestimmt ist, deren Tastproben für die gleichzeitige Bildung von Q Kanalsignal-Tastproben eines gemeinsamen Kanals verwendet werden, während der zweite Teil in den ausgewählten Speichern die bei der Bildung dieses Kanals verwendeten Tastproben selektiert.

2. Vorrichtung nach Anspruch 1, dadurch gekennzeichnet, daß jeder Aktivspeicher (51.1, 52.1) zwei Abschnitte (51.1 bis 51.5 und 52.1 bis 52.5) aufweist, wobei alle ersten Abschnitte (51.1 bis 51.5) die Folge von Schreibadressen empfangen und alle zweiten Abschnitte (52.1 bis 52.5) ebenfalls die Folge von Schreibadressen während einer Phase $T_L$ der Übertragung der Tastproben von den ersten Abschnitten in die zweiten Abschnitte und die Folge von Leseadressen nach der Transferphase während einer Kanalbildungsphase $T_F$ empfangen, und daß die Summiermittel (530) Q Addierer (53.1 bis 53.3) und Q Wähler (56.1 bis 56.3) aufweisen, wobei jeder der Wähler eine Verbindung zwischen einem der Q ausgewählten Aktivspeicher und einem der Q Addierer nach Maßgabe des ersten Teils der Leseadresse herstellt.

3. Vorrichtung nach einem der Ansprüche 1 oder 2, dadurch gekennzeichnet, daß die Adressengeneratoren (600, 610) aufweisen :
— einen ersten Zähler (60) modulo M, der ein Taktsignal im Rhythmus der Tastprobenentnahme von den Sonden zugeführt erhält und ein Steuersignal an die Tast- und Multiplexiermittel (10) liefert,
— einen zweiten Zähler (61) modulo P, wobei P die Zahl der Gruppen von n in jedem der Aktivspeicher (30, 31 ; 51.1, 52.1) gespeicherten Tastproben ist und der erste und der zweite Zähler (60 und 61) die Folge von Schreibadressen liefern,
— einen dritten Zähler (62) modulo Q, der ein vom zweiten Zähler (61) geliefertes Steuersignal empfängt und ein Rücksetzungssignal liefert, wenn seine Zählkapazität überschritten wird,
— einen vierten Zähler (63) modulo M, der ein Taktsignal mit der Frequenz $t_0$ empfängt,
— einen fünften Zähler (64) modulo D, der das Überlaufsignal vom vierten Zähler (63) zugeführt erhält,
— einen Parameterspeicher (66), der die Verzögerungswerte und den zu bildenden Kanälen entsprechende Gewichtungswerte enthält und eine Adresse zugeführt erhält, die aus dem Inhalt des vierten und des fünften Zählers (63 und 64) gebildet ist,
— einen Verschiebungsgenerator (65, 67), der ein Verschiebungssignal entsprechend dem Zeitintervall $T_V$ liefert, wobei die beiden Teile der Leseadressen von den höherwertigen Bits bzw. den niedrigerwertigen Bits der Kombination des Verschiebesignals mit dem Ausgangssignal des Parameterspeichers (66) gebildet wird.

4. Vorrichtung nach Anspruch 3, dadurch gekennzeichnet, daß der Parameterspeicher (66) ein Aktivspeicher ist, der von einem Rechner abhängig von der Antennenposition des Sonargeräts bestimmte Parameterwerte zugeführt erhält.

9

# FIG.1

# FIG. 2

# FIG.3

# FIG.4

FIG. 5

0 109 869

3

# FIG.6

# FIG.7

$T_C = P.Q.T_S = 13312\,\mu s$

$PT_S = 1024\,\mu s$

$T_S$

$OS_1$ $OS_2$ $OS_3$ $OS_4$ $OS_5$ $OS_6$ $OS_7$ $OS_8$ $OS_9$ $OS_{10}$ $OS_{11}$ $OS_{12}$ $OS_{13}$

$V_1$
$V_2$

$96\,\mu s$

72

$\dfrac{PT_S}{T_V}\,DMt_0 = 12288\,\mu s$

$V_K$

70

$PT_S = 1024\,\mu s$

$V_{128}$

71

$t_0$

# FIG. 8

$T_C = P.Q.T_S = 13312 \ \mu s$

$T_V = 32 \mu s$

$PT_S = 1024 \mu s$

$OS_1$ $OS_2$ $OS_3$ $OS_4$ $OS_5$ $OS_6$ $OS_7$ $OS_8$ $OS_9$ $OS_{10}$ $OS_{11}$ $OS_{12}$ $OS_{13}$

$M.t_o = 3 \mu s$

72

$P.M.t_o \ T_S / T_V = 96 \mu s$

$V_1$

$V_2$

6